(19) Europäisches Patentamt
European Patent Office
Office européen des brevets

(11) Veröffentlichungsnummer : **0 111 174**
**B1**

(12) # EUROPÄISCHE PATENTSCHRIFT

(45) Veröffentlichungstag der Patentschrift : **05.03.86**

(51) Int. Cl.[4] : **C 09 B 67/48**, C 09 B 67/10, C 09 B 29/085, D 06 P 1/18

(21) Anmeldenummer : **83111269.3**

(22) Anmeldetag : **11.11.83**

(54) **Färbestabiler Monoazofarbstoff, Verfahren zu seiner Herstellung und dessen Verwendung.**

(30) Priorität : **16.11.82 DE 3242309**

(43) Veröffentlichungstag der Anmeldung : **20.06.84 Patentblatt 84/25**

(45) Bekanntmachung des Hinweises auf die Patenterteilung : **05.03.86 Patentblatt 86/10**

(84) Benannte Vertragsstaaten : **CH DE FR GB IT LI**

(56) Entgegenhaltungen :
**EP-A- 0 073 414**
**FR-A- 2 292 745**
**JP-A-57 042 767**
**JP-A-57 042 982**
**US-A- 2 007 382**

(73) Patentinhaber : **HOECHST AKTIENGESELLSCHAFT**
**Postfach 80 03 20**
**D-6230 Frankfurt am Main 80 (DE)**

(72) Erfinder : **Sommer, Karl, Dr.**
**Thewaltstrasse 6**
**D-6240 Königstein/Taunus (DE)**
Erfinder : **Schneider, Manfred**
**Cuntzstrasse 1**
**D-6239 Eppstein/Taunus (DE)**
Erfinder : **Schickfluss, Rudolf, Dr.**
**Luisenstrasse 37**
**D-6233 Kelkheim (Taunus) (DE)**



Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft eine neue färbestabile, kristallographische Modifikation (« β-Modifikation ») des Farbstoffes der Formel

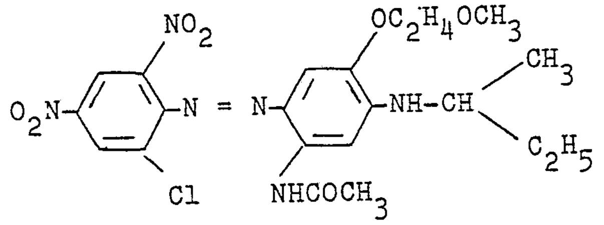

die das in Figur 1 gezeigte Röntgenbeugungsdiagramm mit den charakteristischen Reflexen bei folgenden Glanzwinkeln θ (CuKα-Strahlung) und den angegebenen Intensitäten hat :

| [θ] | 2,74 | 4,27 | 4,70 | 5,50 | 8,74 | 11,24 | 12,44 |
|---|---|---|---|---|---|---|---|
| relative Intensität | 100 | 72 | 40 | 23 | 27 | 32 | 26 |

Der Farbstoff der vorstehend genannten Formel wird durch Diazotieren von 6-Chlor-2,4-dinitro-anilin in konzentrierter Schwefelsäure mit Nitrosylschwefelsäure und durch Kuppeln der so erhaltenen Lösung der Diazoverbindung mit einer Lösung von 2-Isobutylamino-4-acetamino-1-methoxyäthoxy-benzol in verdünnter Schwefelsäure erhalten. Dabei fällt die färbeinstabile α-Modifikation an, die unter den in der Praxis des Färbens auftretenden Bedingungen keine genügende Stabilität besitzt. Die α-Modifikation weist das in Figur 2 gezeigte Röntgenbeugungsdiagramm mit den charakteristischen Reflexen bei folgenden Glanzwinkeln θ ($CuK_\alpha$-Strahlung) mit den angegebenen Intensitäten auf :

| [α] | 3,55 | 4,15 | 5,35 | 9,45 | 10,41 | 12,71 | 13,89 |
|---|---|---|---|---|---|---|---|
| relative Intensität | 42 | 100 | 35 | 24 | 34 | 94 | 48 |

Unter Färbebedingungen, wie hoher Temperatur und in Gegenwart von Färbereihilfsmitteln, ändert sich die färbestabile β-Modifikation hinsichtlich Kristallgröße und Kristallform praktisch nicht mehr, so daß die färberischen Eigenschaften und die Stabilität der Dispersion im Gegensatz zur färbeinstabilen α-Modifikation dabei nicht beeinträchtigt werden.

Die neue, stabile β-Modifikation wird durch 1 bis 5-stündiges Erhitzen, gegebenenfalls unter Druck, einer Suspension des Farbstoffes der genannten α-Modifikation in einem organischen Lösungsmittel, wie beispielsweise einem niedrigmolekularen Alkanol, wie z. B. Methanol, Äthanol, n-Propanol, Isopropanol, oder Essigsäure, Toluol oder Glykolmonomethyläther, auf 60 bis 120 °C erhalten. An organischem Lösungsmittel wird zweckmäßig eine solche Menge angewandt, daß eine leicht rührbare Suspension entsteht.

Während manche Farbstoffe, die in mehreren Modifikationen vorkommen, durch Erhitzen des Farbstoffes in wäßriger Suspension, gegebenenfalls unter Zusatz von oberflächenaktiven Mitteln und organischen Lösungsmitteln, in die färbestabile Modifikation übergehen, war die Umwandlung der α-Modifikation des inredestehenden Farbstoffs weder beim Erhitzen in wäßriger Suspension noch beim Erhitzen einer Suspension in einem Gemisch von Wasser und organischem Lösungsmittel möglich.

Die färbestabile β-Modifikation wird nach ihrer Herstellung beispielsweise durch Filtrieren von der flüssigen Phase abgetrennt und einem bekannten Finish unter Zusatz von anionischen Dispergiermitteln, wie beispielsweise alkylierten Naphthalinsulfonsäuren, Polyvinylsulfonaten, Kondensationsprodukten aus Naphthalinsulfonsäure und Formaldehyd oder aus Phenol und Formaldehyd, Alkalisalzen von Ligninsulfonaten, Sulfitcelluloseablauge, oder nichtionischen Dispergiermitteln, wie veresterte oxalkylierte Novolakharze, veresterte oxalkylierte aromatische Hydroxyverbindungen, veresterte Blockpolymerisate aus Propylenoxid und Äthylenoxid oder auch Mischungen vorgenannter Dispergiermittel bei den üblichen Temperaturen d. h. bei Temperaturen von etwa 20° bis etwa 50 °C unterworfen. Für die Feinverteilung eignen sich die üblichen Vorrichtungen, wie beispielsweise Kugelmühlen oder Sandmühlen.

Die auf diese Weise erhaltenen flüssigen oder pulverförmigen Präparationen der färbestabilen β-Modifikation eignen sich im Gegensatz zu vergleichbaren Präparationen der α-Modifikation uneingeschränkt zum Färben von Fasermaterialien aus Celluloseestern oder synthetischen linearen Polyestern,

wie Polyäthylenglykolterephthalat, bei Temperaturen zwischen 100 und 220 °C. Die färbestabilen Präparationen flocken in wäßrigem Medium und bei Einwirkung hoher Temperaturen nicht aus, was besonders für die Färbung von Wickelkörpern, beispielsweise Kreuzspulen, von Bedeutung ist und geben bei den verschiedenen, allgemein : bekannten Färbetests wie Stippentest, Dan River-Test und dem Test auf Lagerstabilität bei Raumtemperatur und bei 50 °C bessere Prüfungsergebnisse.

In den folgenden Beispielen sind Teile und Prozente, wenn nicht anders vermerkt, Gewichtsteile und Gewichtsprozente.

Beispiel 1

100 Teile des durch Diazotieren von 6-Chlor-2,4-dinitroanilin in konzentrierter Schwefelsäure und durch Kuppeln der so erhaltenen Lösung der Diazoverbindung mit einer Lösung von 2-Isobutylamino-4-acetamino-1-methoxyäthoxybenzol in verdünnter Schwefelsäure hergestellten Farbstoffes werden nach Isolierung in Methanol 3 Stunden bei 65 °C erhitzt. Man erhitzt hierbei in einer solchen Methanolmenge, daß eine leicht rührbare Suspension vorliegt. Dabei wandelt sich die färbeinstabile α-Modifikation in die färbestabile β-Modifikation um. Der Farbstoff wird abfiltriert und mit 20 Teilen eines Kondensationsproduktes aus Kresol, Formaldehyd und Natriumbisulfit, 120 Teilen eines Natrium-Ligninsulfonates und 20 Teilen eines veresterten Äthoxylates eines Alkylphenols und Wasser in der Perlmühle bis maximal 50 °C gemahlen, bis die Feinverteilung ausreichend ist. Anschließend wird die Präparation in einer Sprühhapparatur getrocknet und mit Natrium-Ligninsulfonat auf die gewünschte Stärke an Reinfarbstoff eingestellt. Das so erhaltene Pulver genügt allen färberischen Anforderungen. Verfährt man wie vorstehend beschrieben, jedoch mit dem Unterschied, daß man statt in Methanol in n-Propanol bei 100 °C erhitzt, so gelangt man zum gleichen Ergebnis.

Beispiel 2

100 Teile des gemäß Beispiel 1 erhaltenen Monoazofarbstoffes werden in Essigsäure durch zweistündiges Erhitzen auf 100 °C in die färbestabile β-Modifikation übergeführt. Man erhitzt hierbei in einer solchen Menge von Essigsäure, daß eine leicht-rührbare Suspension gegeben ist. Der Farbstoff wird mit 60 Teilen eines Kondensationsproduktes aus Kresol, Formaldehyd und Natriumbisulfit, 60 Teilen des Natriumsalzes eines Ligninsulfonates und 20 Teilen des Natriumsalzes von diisobutylnaphthalinsulfonsaurem Natrium, wie in Beispiel 1 beschrieben, gemahlen, getrocknet und eingestellt. Die so erhaltene pulverförmige Präparation genügt allen färberischen Anforderungen, die in der Praxis gestellt werden.

Beispiel 3

100 Teile des gemäß Beispiel 1 erhaltenen Monoazofarbstoffes werden in Glykolmonomethyläther 1 Stunde auf 120 °C erhitzt. Man erhitzt hierbei in einer solchen Menge von Glykolmonomethyläther, daß eine leicht-rührbare Suspension gegeben ist. Der Farbstoff wird mit den in Beispiel 1 aufgeführten Dispergiermitteln und Wasser in einer Perlmühle bei Temperaturen bis 50 °C bis zur genügenden Feinverteilung gemahlen und anschließend auf ein Volumen von 400 ml aufgefüllt.

Man erhält eine flüssige Farbstoffpräparation mit ca. 25 % Farbstoffanteil mit einwandfreien färberischen Eigenschaften und guter Stabilität.

Verfährt man wie vorstehend beschrieben, jedoch mit dem Unterschied, daß man statt in Glykolmonomethyläther in Toluol bei 111 °C erhitzt, so gelangt man zum gleichen Ergebnis.

**Patentansprüche**

1. Die färbestabile Modifikation (β-Modifikation) des Farbstoffes der Formel

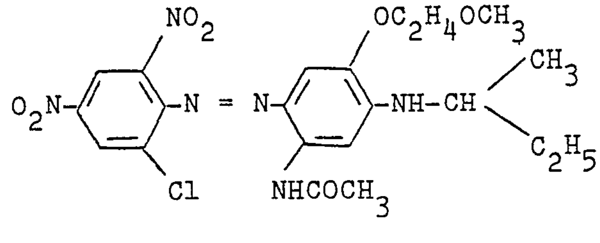

gekennzeichnet durch das in Figur 1 gezeigte Röntgenbeugungsdiagramm mit den charakteristischen Reflexen bei den folgenden Glanzwinkeln und den angegebenen relativen Intensitäten :

| [θ] | 2,74 | 4,27 | 4,70 | 5,50 | 8,74 | 11,24 | 12,44 |
|---|---|---|---|---|---|---|---|
| relative Intensität | 100 | 72 | 40 | 23 | 27 | 32 | 26 |

2. Verfahren zur Herstellung der färbestabilen Modifikation (β-Modifikation) des Farbstoffes der Formel

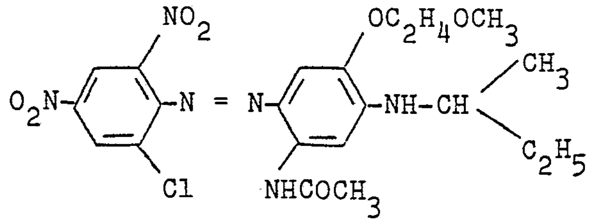

(I)

die das in Figur 1 gezeigte Röntgenbeugungsdiagramm mit den charakteristischen Reflexen bei den nachstehend angegebenen Glanzwinkeln θ und den angegebenen Intensitäten

| [θ] | 2,74 | 4,27 | 4,70 | 5,50 | 8,74 | 11,24 | 12,44 |
|---|---|---|---|---|---|---|---|
| relative Intensität | 100 | 72 | 40 | 23 | 27 | 32 | 26 |

aufweist, dadurch gekennzeichnet, daß man den Farbstoff der genannten Formel (I) der färbeinstabilen Modifikation α, die durch das Röntgenbeugungsdiagramm der Figur 2 charakterisiert ist, in einem organischen Lösungsmittel auf Temperaturen von 60 bis 120 °C erhitzt.

3. Verfahren nach Anspruch 2, dadurch gekennzeichnet, daß man in einem niedrigmolekularen Alkanol, in Essigsäure, Toluol oder Glykolmonomethyläther als organischem Lösungsmittel erhitzt.

4. Verwendung der in Anspruch 1 genannter färbestabilen Modifikation (β-Modifikation) zum Färben von Fasermaterialien aus Celluloseestern oder synthetischen linearen Polyestern.

**Claims**

1. The dyeing-stable modification (β-modification) of the dyestuff of the formula

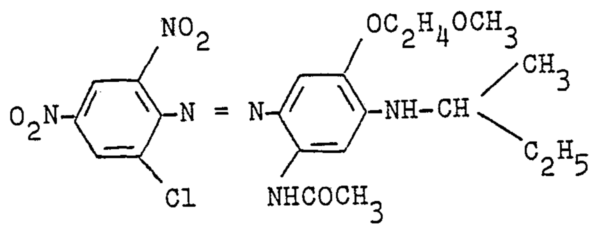

which has the X-ray diffraction diagram shown in Figure 1 and having the characteristic reflections at the following glancing angles and relative intensities :

| [θ] | 2.74 | 4.27 | 4.70 | 5.50 | 8.74 | 11.24 | 12.44 |
|---|---|---|---|---|---|---|---|
| relative inventsity | 100 | 72 | 40 | 23 | 27 | 32 | 26 |

2. A process for preparing the dyeing-stable modification (β-modification) of the dyestuff of the formula

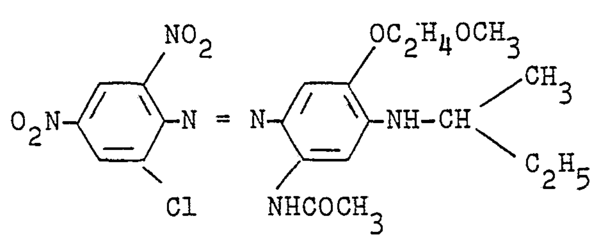

(I)

which has the X-ray diffraction diagram shown in Figure 1 and having the characteristic reflections at the following glancing angles θ and intensities

| [θ] | 2.74 | 4.27 | 4.70 | 5.50 | 8.74 | 11.24 | 12.44 |
|---|---|---|---|---|---|---|---|
| relative inventsity | 100 | 72 | 40 | 23 | 27 | 32 | 26 |

which comprises heating the dyestuff of said formula (I) of the dyeing-unstable α-modification, which is characterized by the X-ray diffraction diagram of Figure 2, at temperatures of 60 to 120 °C in an organic solvent.

3. The process as claimed in claim 2, wherein the heating is carried out in a low molecular weight alkanol, acetic acid, toluene or glycol monomethyl ether as the organic solvent.

4. Use of the dyeing-stable modification (β-modification) mentioned in claim 1, for dyeing fiber materials made of cellulose esters or synthetic linear polyesters.

**Revendications**

1. Modification à pouvoir tinctorial stable (modification β) du colorant de formule :

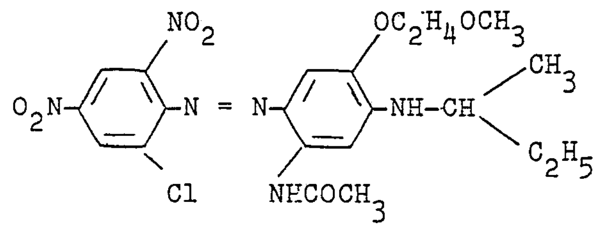

modification caractérisée en ce qu'elle donne le diagramme de diffraction des rayons X représenté sur la figure 1 dont les réflexions caractéristiques ont lieu aux angles de Bragg suivants et avec les intensités relatives suivantes :

| θ | 2,74 | 4,27 | 4,70 | 5,50 | 8,74 | 11,24 | 12,44 |
|---|---|---|---|---|---|---|---|
| Intensité relative | 100 | 72 | 40 | 23 | 27 | 32 | 26 |

2. Procédé de préparation de la modification à pouvoir tinctorial stable (modification β) du colorant de formule :

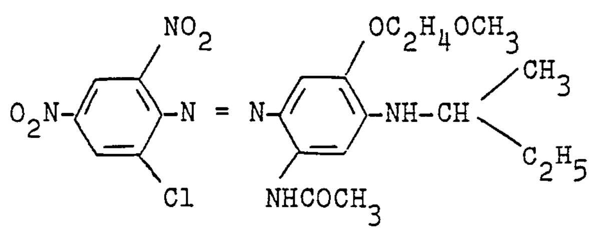

(I)

modification qui donne le diagramme de diffraction des rayons X représenté sur la figure 1 dont les réflexions caractéristiques ont lieu aux angles de Bragg θ suivants et avec les intensités suivantes :

| θ | 2,74 | 4,27 | 4,70 | 5,50 | 8,74 | 11,24 | 12,44 |
|---|---|---|---|---|---|---|---|
| Intensité relative | 100 | 72 | 40 | 23 | 27 | 32 | 26 |

ce procédé étant caractérisé en ce qu'on chauffe à des températures de 60 à 120 °C, dans un solvant organique, le colorant de formule I mentionné sous sa modification α à pouvoir tinctorial instable qui est caractérisée par le diagramme de diffraction des rayons X représenté sur la figure 2.

3. Procédé selon la revendication 2 caractérisé en ce qu'on chauffe dans un solvant organique qui

est un alcanol à bas poids moléculaire, l'acide acétique, le toluène ou l'éther monométhylique de l'éthylène-glycol.

4. Application de la modification à pouvoir tinctorial stable (modification β) mentionné à la revendication 1 pour la teinture de matières fibreuses en esters de la cellulose ou en polyesters linéaires synthétiques.

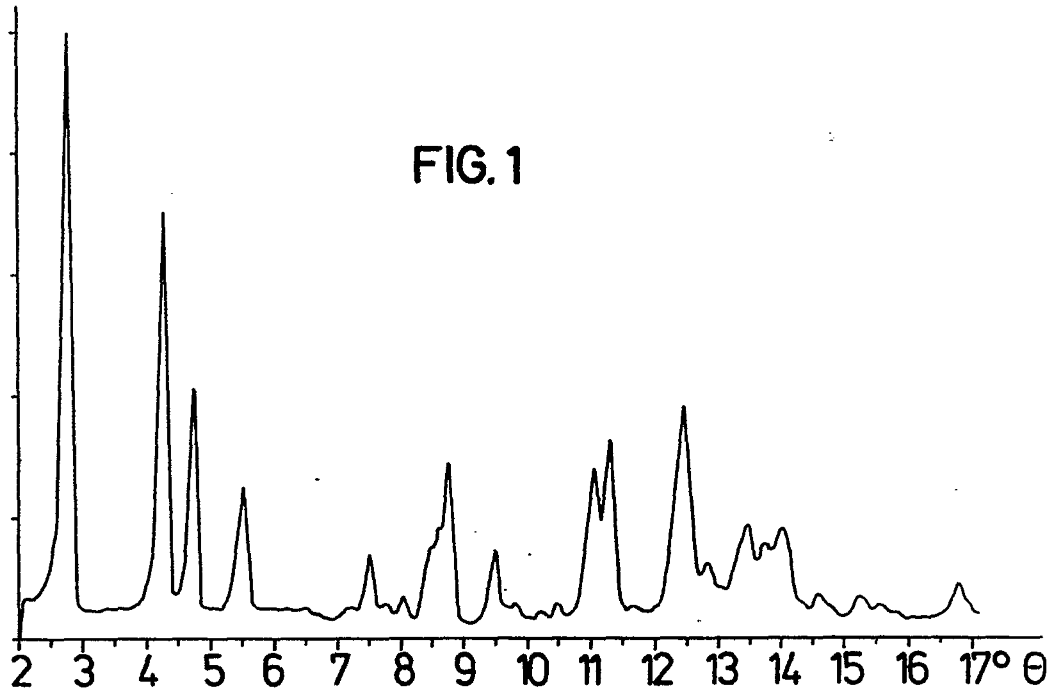
FIG. 1
2
3
4
5
6
7
8
9
10
11
12
13
14
15
16
17° θ

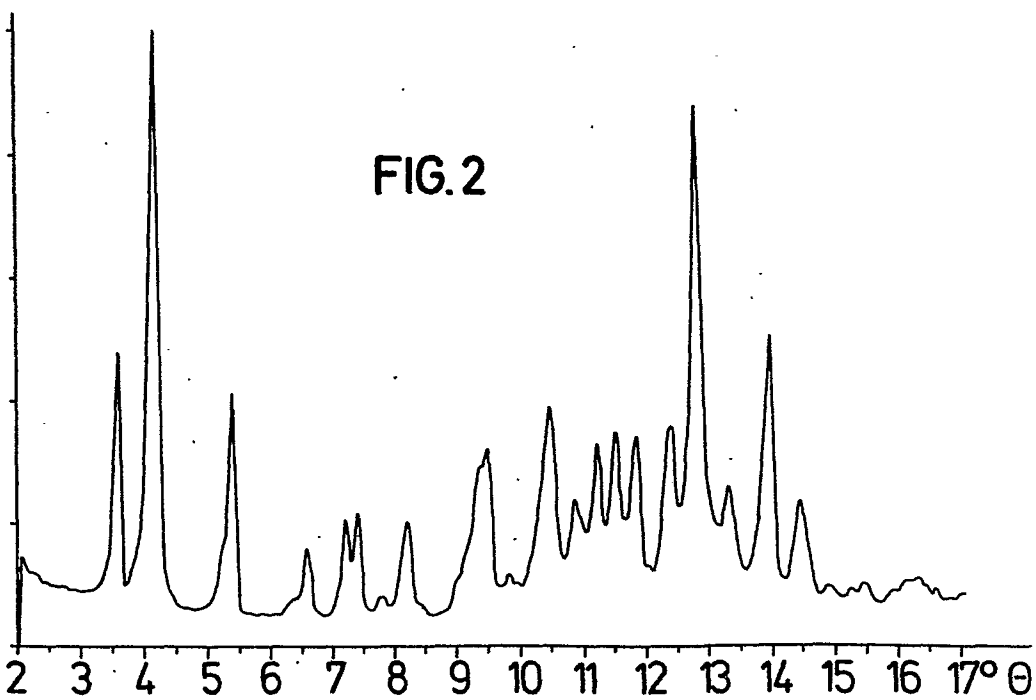
FIG. 2
2
3
4
5
6
7
8
9
10
11
12
13
14
15
16
17° θ